# EUROPEAN PATENT SPECIFICATION

(11) **EP 2 863 214 B1**
(45) Date of publication and mention of the grant of the patent: **18.12.2019**
(21) Application number: 13188644.2
(22) Date of filing: 15.10.2013
(51) Int. Cl.: G01N 27/18

(54) **A thermal conductivity detector having a multi-layer sensing element, a gas sensor, and a method of gas sensing**
Wärmeleitfähigkeitsdetektor mit einem mehrschichtigen Sensorelement, Gassensor, und Verfahren zur Gasmessung
Détecteur de conductivité thermique ayant un élément de détection multicouche, capteur de gaz et procédé de détection de gaz

(43) Date of publication of application: 22.04.2015
(73) Proprietor: ams International AG, 8640 Rapperswil-Jona (CH)
(72) Inventor: Huang, Jinquan, Redhill, Surrey RH1 1SH (GB); Tan, Poh Cheng, Redhill, Surrey RH1 1SH (GB); Bolt, Michael, Redhill, Surrey RH1 1SH (GB)
(74) Representative: Epping - Hermann - Fischer

(56) References cited:
- EP-A1- 2 645 091
- EP-A2- 1 762 851
- EP-A2- 2 339 334
- US-A- 5 549 870
- US-A1- 2009 312 954
- Minco: "Section 7: Miniature Sensors", Sensors & Instrumentation Solutions Guide, 1 April 2011 (2011-04-01), pages 7-1, XP055104556, Retrieved from the Internet: URL:http://www.minco.com/Sensors-and-Instr uments/Products/~/media/WWW/Resource Library/Sensors/Miniature/Miniature Sensors Tech Spec.ashx [retrieved on 2014-02-26]

## Description

### Field

This disclosure relates to thermal conductivity detectors, to gas sensors comprising thermal conductivity detectors, and to methods of detecting a gas.

### Background

For gas detection or sensing in general, and for detection of sensing of carbon dioxide in particular, thermal conductivity detectors are of interest. This is increasingly so in view of recent developments towards miniaturisation of such detectors, and in particular for integration with standard semiconductor processing such as CMOS processing.

In common with detectors using some other detection modes or modalities, thermal conductivity detectors typically operate at elevated temperatures, and the elevated temperature typically is achieved by Joule heating effect, that is to say a current is passed through a resistor, resulting in a temperature rise. The resistor typically is a filament, which may be nearby or adjacent to a detector element, or may be integral with a detecting element.

United States patent publication number US5,549,870 discloses a filament type detector, having a resistive component intended to be heated by the Joule effect in the medium, and an interface region suitable for reacting with the medium by a physico-chemical process, such as catalysis.

In contrast to some other detection modes, thermal conductivity detectors rely on physical effects rather than physico-chemical effects. In general, in thermal conductivity detectors, the filament which undergoes the Joule heating actually forms the detecting element itself: thermal conductivity detectors comprise a heated metal "line" or filament which is exposed to the environment; changes in the gas composition of the environment affect the conductance of heat away from the heated metal line and thus alter the equilibrium temperature of the line. Thermal conductivity detection (TCD) may offer the prospect of low-cost, low-power gas sensors.

There remains a need for improved sensitivity for detectors based on physical rather physic-chemical phenomena, such as a thermal conductivity detector.

Document EP 2645091 A1 describes an integrated circuit comprising a gas sensor. The gas sensor is thermal conductivity-based and comprises a substrate, a support material and a sensor element that is suspended so as to be separate from the substrate. A current is passed through the sensor element causing the sensor element to heat up. The surrounding gas carries heat away from the sensor element. At thermal equilibrium, the resistivity of the sensor element, dependent upon the temperature of the sensor element, is sensitive to the amount and rate of heat transfer. Thus, the resistivity of the sensor element is dependent upon the composition of the surrounding gas. By making resistivity measurements of the sensor element, the composition of the surrounding gas can be determined.

Document EP 1762851 A2 is related to a flow sensor with a metal film resistor. The sensor comprises a substrate, a heat element, an upstream-side resistance temperature detector and a downstream-side side resistance temperature detector. A protective film and an interlayer isolating film are sequentially formed on the heat element and the resistance temperature detectors.

Document US 2009/0312954 A1 refers to a sensor for gas sensing having a micro hotplate structure and a layer stack with: sensing layer / isolator layer / buried metal electrode layer / isolator layer / heater metal layer / isolator layer. A change in gas composition is detected by measuring the electrical characteristic of the sensing layer realized as a semiconductor oxide layer.

### Summary

It is an object of the present patent application to provide a gas sensor comprising a thermal conductivity detector and a method of detecting a gas. This object is solved by the subject matter of the independent claims. Further developments and embodiments are described in the dependent claims.

According to a first aspect there is provided a gas sensor comprising a thermal conductivity detector, as defined by claim 1. Accordingly, it may be possible that the restriction on the number of choices available for temperature coefficient of resistance of the sensing element, which may be directly tied to its resistivity, may be relaxed.

In embodiments the inner layer is at least partially surrounded by the outer layer, and the outer layer is arranged to be exposed to a gas.

In embodiments the elongate sensing element comprises one or more suspended sections, and the outer layer surrounds the inner layer along the suspended sections. The surface area of the sensing element exposed to the gas may thereby be increased or even maximised. In other embodiments the elongate sensing element comprises one or more sections supported by a support material, and along these sections the inner layer is surrounded by the outer layer and the support layer. That is to say, in these sections the outer layer partially surrounds the inner layer, and adjoins the support material such that the inner layer is completely surrounded and thus not directly exposed to the environment. The support material may be a substrate. Such embodiments may be more robust than embodiments in which the sensing element is suspended, although they may in general have a relatively smaller surface area exposed to the environment and thus to the gas.

In embodiments the elongate multi-layered sensing element is arranged so as to have a path length which exceeds a physical length of the detector. A relatively long path length may provide for a relatively increased sensitivity. The relatively long path length may be provided by arranging the elongate multi-layered sensing element to include at least one of meanders and spirals.

According to another aspect there is provided a semiconductor-based gas sensor, comprising at least one CMOS FET device and a thermal conductivity detector as described above. The semiconductor-based gas sensor may further comprise further at least one of a wireless transmitter and a wireless transceiver. Since thermal conductivity detectors according to embodiments may have a relatively low power requirement together with high sensitivity, compared with conventional thermal conductivity detectors, they may facilitate or enable use in applications or environments with stringent power requirements, such as remote wireless devices.

The gas sensor may be adapted to scavenge power from an electromagnetic field. It may form part of a multi-sensor device. Thus gas sensors incorporating one or more such thermal conductivity detectors may be comprised in a multimodal sensing device which may be capable of two or more sensing modalities; in particular, the thermal conductivity detector according to embodiments may be fabricated in a device having one or more integral humidity, temperature, or other, sensors
According to another aspect there is provided a method of detecting a gas comprising the steps of claim 11.

These and other aspects of the invention will be apparent from, and elucidated with reference to, the embodiments described hereinafter.

### Brief description of Drawings

Embodiments of the invention will be described, by way of example only, with reference to the drawings, in which
figure 1 shows a schematic illustration of the sensing element in a thermal conductivity detector (TCD comprised in a gas sensor;
figure 2 shows a cross-section of a TCD according to embodiments, at figure 2(a) in general cross-section, and at figure 2(b) in more detail;
figure 3 shows a cross-section of a TCD according to an example not falling within the scope of the claimed invention, at figure 3(a) in general cross-section, and at figure 3(b) in more detail;
figure 4 shows the detailed cross-section through a sensing element according to an example not covered by the claimed invention;
figure 5 shows the detailed cross-section through a sensing element according to yet another embodiment; and
figure 6 shows a not claimed example manufacturing sequence to produce a thermal conductivity detector according to embodiments.

It should be noted that the figures are diagrammatic and not drawn to scale. Relative dimensions and proportions of parts of these figures have been shown exaggerated or reduced in size, for the sake of clarity and convenience in the drawings. The same reference signs are generally used to refer to corresponding or similar feature in modified and different embodiments / examples.

### Detailed description of embodiments

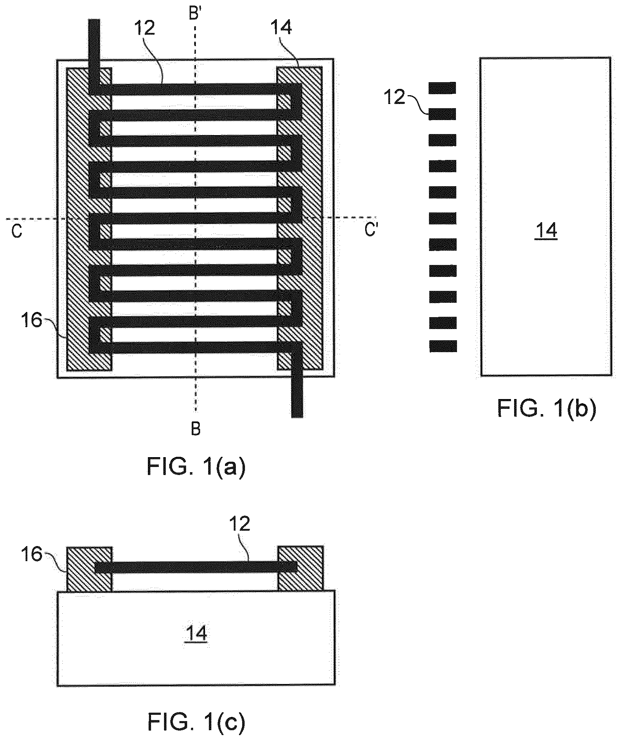

Figure 1 shows a schematic illustration of the sensing element in a gas TCD gas sensor. Figure 1(a) shows a plan view of a sensing element 12, which consists of a metal line. In order to increase its length - that is to say, the path length - and hence the surface area in contact with the surrounding gas, the metal line may be patterned in a variety of shapes, such as the meandering arrangement shown in figure 1(a), or spiral, meshed or other arrangement. The line may be in contact with a substrate 14 or may, as shown, be suspended so as to be separate from the substrate 14. In the case that the sensing element 12 takes the form of a suspended line, it may be supported by a support material 16. Support material 16 may take the form of a structure which may be a single layer, or may be a stack of separate layers. Figure 1(b) shows a cross-section along the line BB' of figure 1a and illustrates the suspension of a typical sensing element 12; figure 1(c) shows a cross-section through the line CC' of figure 1A, and illustrates an example of the supporting structure for partially suspending the sensing element.

In operation, an electrical current is passed through the sensing element 12 to induce Joule heating. The steady-state temperature of the heated sensing element 12 depends on the rate of heat loss to the surrounding gas - and that in turn depends on the thermal conductivity of the gas. Since materials in general and metals in particular have an electrical resistance which varies with their temperature, a change in the steady-state temperature of the sensing element 12 results in a change in its resistance. The temperature and electrical resistance are related through a temperature coefficient of resistance (TCR). Thus, by sensing the resistance change for example using a Wheatstone bridge, a change in gas composition change may be identified.

Whereas, in principle, providing a gas sensor based on this principle, that is to say thermal conductivity detection, may be simple and straightforward, and as shown in figure 1 a TCD structure may be simple and therefore low cost, challenges still remain in providing a cost-effective, sensitive sensor.

Firstly, in order that a change in gas composition may result in a sufficiently large change in the steady state temperature of the sensing element, the temperature must be significantly different from the surrounding temperature. Typical operating temperatures may be in the order of 200° C or higher. This elevated temperature is achieved through Joule heating as mentioned above, which requires an electrical current. The power requirements of the gas sensor to provide this electrical current may thus be significant, and may provide a limitation on miniaturisation, or a restriction for remote and in particular wireless applications. Since the power required to heat up the metal lines in TCD is given by P = I²R for a fixed current, given the linear (directly proportional) relationship between the power P and the resistance of the metal line R, the power P would decrease for decreasing R (or to be more precise, P decreases for decreasing resistivity p). This effectively means that a metal with lower resistivity is desired for lower power consumption.

Secondly, the gas sensing sensitivity of TCD devices is typically of the order of parts per hundred - that is to say, of the order of a few %. In contrast, detection levels in the range of at most hundredths of parts per million (ppm), (that is to say, over the order of 0.01%) may be desirable or even necessary for some common applications: as an example, the concentration of CO2 in the atmosphere is approximately 310 ppm. So, to pick up changes in its concentration may require sensitivities of 200 ppm or better. A high sensitivity of the TCD would mean that the TCD is capable of producing large detectable changes in resistance in response to minute changes in a gas composition, for example variations in CO2 level in air. Since compositional change in gas results in change in the steady-state temperature of the sensing element, high sensitivity requires the metal line implementing the sensing element line to give large resistance changes due to small variations in temperature, i.e. a large temperature coefficient of resistance (TCR) of the metal is required for high sensitivity.

In other sensing modes having heating elements, the function of the heating elements may be separated from the function of the sensing element. Each element may thus be chosen for optimal performance. This option is not available for conventional thermal conductivity detectors, since the same element is required for both joule heating and sensing.

The inventors have made the surprising realisation, that despite the fact that a single element is utilised in thermal conductivity detection, the element may be provided as a composite material. That is to say the element may consist of more than one different material, and the resulting composite may have better performance than either of its constituent parts (or than any of its constituent parts, for composites which comprise more than two materials).

Thus, according to embodiments there is provided an elongate multi-layered sensing element, the sensing element comprising an outer layer and an inner layer, the outer layer having a higher resistivity than the inner layer and a higher temperature coefficient of resistance than the inner layer. In such an arrangement, the outer layer may be chosen to have a high TCR in order to provide a good sensitivity, whilst the inner layer is chosen to have a low resistivity for low power consumption.

The following table lists the resistivity (ρ) and temperature coefficient of resistance (TCR), for various commonly used metals, together with those of an example multi-layer composite according to embodiments.

**Table 1. Examples of reported values of resistivity and temperature coefficient of resistance of various metals, together with that of a multi-layer composite according to embodiments**

| Metal | Resistivity ρ (µ.ohm cm) | TCR x1000 (K⁻¹) |
|---|---|---|
| Aluminium (Al) | 2.65 | 3.8 |
| Copper (Cu) | 1.68 | 3.9 |
| Tungsten (W) | 5.58 | 4.5 |
| Nickel (Ni) | 6.85 | 6.4 |
| Zinc (Zn) | 5.92 | 3.7 |
| Ni+ Cu double layer | 4.33 | 5.15 |

As can be seen from the table, by suitable choice of outer and inner layer, the sensing element may be provided with an optimum combination of resistivity and temperature coefficient of resistance. If one takes tungsten (W) as a baseline (100%), then, for example nickel (Ni) requires more power (6.99/5.58, i.e. 125%), but provides a better sensitivity (142%), whilst copper (Cu) requires far less power (31%), but provides lower sensitivity (87%). In contrast, a multi-layer combination of an outer layer of nickel and inner layer of copper, with an equally divided cross-section area such that the material content is 50% by volume of each, provides both a power saving relative to tungsten (75% relative power required) and increased sensitivity (at 114%).

The above-mentioned example of nickel with copper, is only an example; in other embodiments different combinations of metals may be used or the same combination at different concentrations by volume. The skilled person will further appreciate that appropriate choice of materials may provide additional benefits: in particular using an oxidation-resistant material as the outer layer may provide for better reliability in corrosive or other challenging environments such as high humidity environments. Furthermore, according to not claimed examples, although in general at least one of the layers of the multi-layer sensing elements will be metallic in order to provide a low overall resistivity, non-metallic layers may be included in the multi-layer structure; for example, a thin layer of titanium nitride (TiN) may be included for improved performance in terms of, for instance, reliability against oxidation.

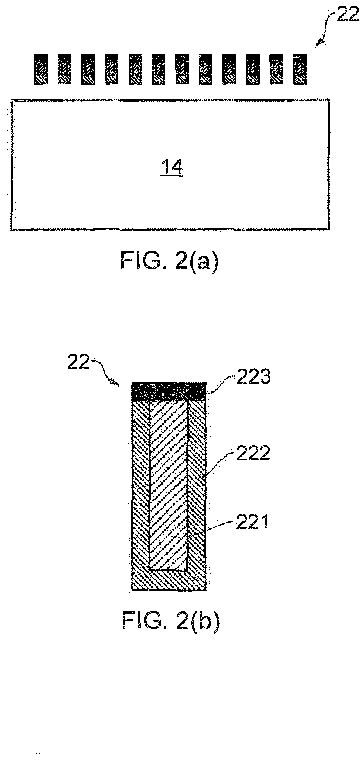

Figure 2 shows a cross-section of a thermal conductivity detector according to embodiments, at figure 2(a) in cross-section corresponding to the cross-section of figure 1(b), and at figure 2(b) in more detail showing at a cross-section through the elongate multi-layered sensing element. As shown, a sensing element 22 is suspended apart from a substrate 14. As shown in figure 2(b), the sensing element 22 comprises an inner layer 221, which is at least partially surrounded by an outer layer 222. In this embodiment, and as will be described in more detail hereinbelow, the sensing element 22 may include a capping layer 223 of a hard mask material. The capping layer 223 may, or may not, be functional as regards operation of the sensing element 22, but may provide for convenient and optimised fabrication processes. The outer layer 222, together with the capping layer 223 completely encapsulate, that is to say together they surround, the inner layer 221.

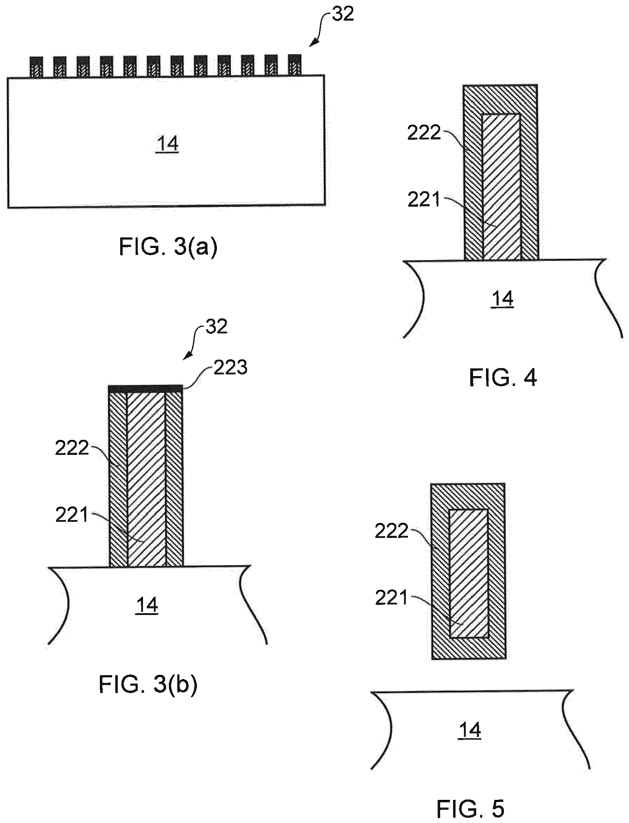

Figure 3 shows a cross-section of a thermal conductivity detector according to a not claimed example: at figure 3(a) in general cross-section, and in more detail at figure 3(b). In this example, the sensing element 32 is not suspended, but is in direct contact with the substrate 14. The outer layer 222 and capping layer 223 do not, in this example, completely surround the inner layer 221, but together with the substrate 14 they do encapsulate it.

Figure 4 shows the detailed cross-section through a sensing element according to another example, not falling within the scope of the claims. This example does not include a hard mask capping layer, and since the sensing element is in direct contact with the substrate, in this case the outer layer 222 together with the substrate 14 encapsulates all in completely surrounds the inner layer 221.

Figure 5 shows the detailed cross-section through a sensing element according to yet another embodiment. In this embodiment the sensing elements is suspended from the substrate 14, and the outer layer 222 completely surrounds or encapsulates the inner layer 221.

In yet further not claimed examples (not shown), the multi-layer sensing element may have a structure as shown in figure 2(b), but be in direct contact with the substrate 14 as shown in Figure 3.

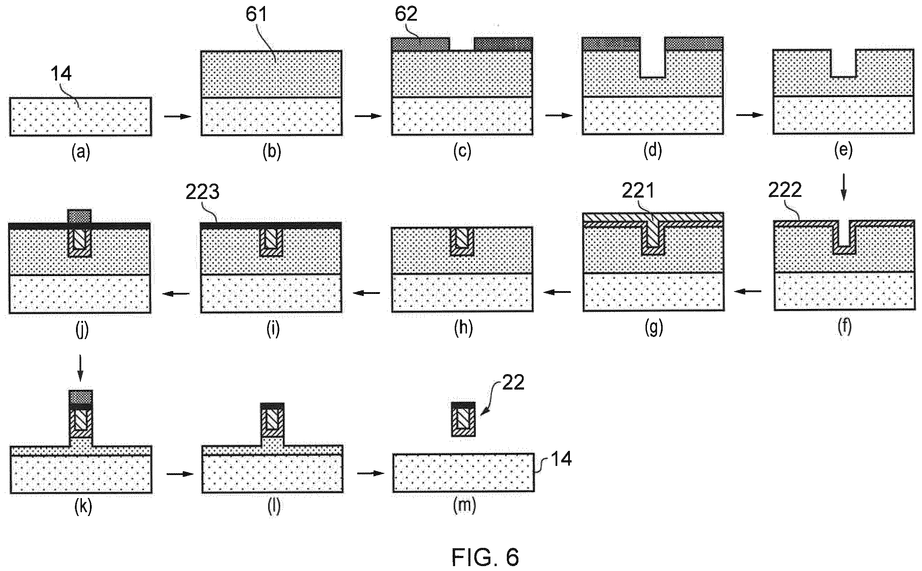

Figure 6 shows a not claimed example manufacturing sequence to produce a thermal conductivity detector according to embodiments. A substrate 14 is provided at (a), and the dielectric layer 61 is deposited at (b). A photoresist or other patterned masking layer 62 is deposited at (c), and a trench etched into the dielectric 61 at (d). The photoresist 62 is removed at (e), and a first layer 222, which is generally metal, is deposited as shown at (f). This metal layer will become the outer metal 222 of the sensing element, so in general will be chosen so as to have a relatively high temperature coefficient of resistivity, compared with the subsequent layer or layers forming the sensing element. The trench is filled with a second layer 221, as shown at (g); this second layer, which again generally will be a metal layer 221, will form the inner layer of the sensing element, and thus will generally be chosen so as to have a relatively low resistivity compared with the first layer 222. A CMP (chemical mechanical polishing) step is then carried out, shown at (h), so as to planarise the structure, and a hard mask 223 is deposited in step (i). A second photoresist layer, or other masking layer, is deposited and patterned so as to protect the trench area during a subsequent etching step, as shown at (k). The photoresist is removed, as shown at (I), and finally, a sensing element release etch is carried out, so as to result in the sensing element 22 being suspended apart from the substrate 14. The skilled person will appreciate that this process flow is an example only, and alternative and/or additional steps which will be familiar to the skilled person may be used either instead of or in addition to the summary steps described above. It will be appreciated that compared with known, single material, sensing elements, the process just described involves only one additional step (that is to stay a step (f)) being the deposition of an outer layer, and no additional masks at all. Thus compared with conventional thermal conductivity detector elements, the fabrication process of embodiments does not necessarily involve significant additional complexity cost.

From reading the present disclosure, other variations and modifications will be apparent to the skilled person. Such variations and modifications may involve equivalent and other features which are already known in the art of gas sensors, and which may be used instead of, or in addition to, features already described herein. However, the invention is defined by the appended claims.

Features which are described in the context of separate embodiments may also be provided in combination in a single embodiment. Conversely, various features which are, for brevity, described in the context of a single embodiment, may also be provided separately or in any suitable sub-combination.

For the sake of completeness it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims.

## Claims

1. A gas sensor, comprising a thermal conductivity detector,
wherein the gas sensor comprises a substrate (14) and a support material (16),
wherein said thermal conductivity detector comprises an elongate multi-layered sensing element (12) which is supported by the support material (16) and, thus, is suspended so as to be separate from the substrate (14),
wherein the elongate multi-layered sensing element (12) is electrically heated by passing an electrical current through it; and a change in the steady-state temperature of the elongate multi-layered sensing element (12) results in a change in its resistance thus that, by sensing the resistance change, a change in gas composition is identified,
wherein said elongate multi-layered sensing element (12) comprises an outer layer (222) and an inner layer (221), the outer layer (222) having a higher resistivity than the inner layer (221) and a higher temperature coefficient of resistance than the inner layer (221), and
wherein said outer layer (222) is metallic and the inner layer (221) is metallic.

2. The gas sensor according to claim 1, wherein the inner layer (221) is at least partially surrounded by the outer layer (222), and the outer layer (222) is arranged to be exposed to a gas.

3. The gas sensor according to claim 1 or 2, wherein the elongate multi-layered sensing element (12) comprises one or more suspended sections, and the outer layer (222) surrounds the inner layer (221) along the suspended sections.

4. The gas sensor according to any preceding claim, wherein the elongate multi-layered sensing element (12) comprises one or more sections supported by the support material (14), and along these sections the inner layer (221) is surrounded by the outer layer (222) and the support material (14).

5. The gas sensor according to any preceding claim, wherein the elongate multi-layered sensing element (12) is arranged so as to have a path length which exceeds a physical length of the detector.

6. The gas sensor according to claim 5, wherein the elongate multi-layered sensing element (12) is arranged to comprise at least one of meanders and spirals.

7. The gas sensor according to any preceding claim, wherein the gas sensor is realized as a semiconductor-based gas sensor and comprises at least one CMOS FET.

8. The gas sensor as claimed in claim 7, further comprising at least one of a wireless transmitter and a wireless transceiver.

9. The gas sensor as claimed in claim 7 or 8, adapted to scavenge power from an electromagnetic field.

10. A multi-sensor device, comprising the gas sensor according to one of claims 7 to 9 and at least one of a humidity sensor and a temperature sensor.

11. A method of detecting a gas comprising:
exposing an outer layer (222) of an elongate multi-layered sensing element (12) to said gas, said elongate multi-layered sensing element (12) comprising the outer layer (222) and an inner layer (221), the outer layer (222) being metallic and having a higher resistivity than the inner layer (221) and a higher temperature coefficient of resistance than the inner layer (221); the inner layer (221) being metallic,
wherein the elongate multi-layered sensing element (12) is supported by a support material (16) and, thus, is suspended so as to be separate from a substrate (14),
electrically heating the elongate multi-layered sensing element (12) by passing an electrical current through it; and
sensing for changes in the thermal conductivity of said elongate multi-layered sensing element (12) by monitoring its resistance, wherein by sensing the resistance change, a change in gas composition is identified.

## Patentansprüche

1. Gassensor, der einen Wärmeleitfähigkeitsdetektor aufweist, wobei der Gassensor ein Substrat (14) und ein Trägermaterial (16) aufweist,
wobei der Wärmeleitfähigkeitsdetektor ein längliches mehrschichtiges Sensorelement (12) aufweist, das durch das Trägermaterial (16) abgestützt ist und somit so aufgehängt ist, dass es vom Substrat (14) getrennt ist,
wobei das längliche mehrschichtige Sensorelement (12) elektrisch erwärmt wird, indem ein elektrischer Strom durch es hindurchgeschickt wird; und eine Veränderung der eingeschwungenen Temperatur des länglichen mehrschichtigen Sensorelements (12) zu einer Veränderung in seinem Widerstand führt, so dass durch Erfassen der Widerstandsveränderung eine Veränderung der Gaszusammensetzung erkannt wird,
wobei das längliche mehrschichtige Sensorelement (12) eine Außenschicht (222) und eine Innenschicht (221) aufweist, wobei die Außenschicht (222) einen höheren spezifischen Widerstand als die Innenschicht (221) und einen höheren Widerstands-Temperaturkoeffizienten als die Innenschicht (221) hat, und
wobei die Außenschicht (222) metallisch ist und die Innenschicht (221) metallisch ist.

2. Gassensor nach Anspruch 1, wobei die Innenschicht (221) zumindest teilweise von der Außenschicht (222) umgeben ist und die Außenschicht (222) dazu eingerichtet ist, einem Gas ausgesetzt zu werden.

3. Gassensor nach Anspruch 1 oder 2, wobei das längliche mehrschichtige Sensorelement (12) einen oder mehrere aufgehängte Abschnitte aufweist und die Außenschicht (222) die Innenschicht (221) entlang der aufgehängten Abschnitte umgibt.

4. Gassensor nach einem der vorhergehenden Ansprüche, wobei das längliche mehrschichtige Sensorelement (12) einen oder mehrere Abschnitte aufweist, die durch das Trägermaterial (14) abgestützt sind, und entlang dieser Abschnitte die Innenschicht (221) von der Außenschicht (222) und dem Trägermaterial (14) umgeben ist.

5. Gassensor nach einem der vorhergehenden Ansprüche, wobei das längliche mehrschichtige Sensorelement (12) so eingerichtet ist, dass es eine Pfadlänge hat, die über eine physische Länge des Detektors hinausgeht.

6. Gassensor nach Anspruch 5, wobei das längliche mehrschichtige Sensorelement (12) so eingerichtet ist, dass es Mäander und/oder Spiralen aufweist.

7. Gassensor nach einem der vorhergehenden Ansprüche, wobei der Gassensor als ein halbleiterbasierter Gassensor verwirklicht ist und mindestens einen CMOS FET aufweist.

8. Gassensor nach Anspruch 7, darüber hinaus einen drahtlosen Sender und/oder einen drahtlosen Sender-Empfänger aufweisend.

9. Gassensor nach Anspruch 7 oder 8, der dazu angepasst ist, Energie aus einem elektromagnetischen Feld abzufangen.

10. Multi-Sensor-Vorrichtung, die den Gassensor nach einem der Ansprüche 7 bis 9 und einen Feuchtigkeitssensor und/oder einen Temperatursensor aufweist.

11. Verfahren zum Erfassen eines Gases, umfassend:
eine Außenschicht (222) eines länglichen mehrschichtigen Sensorelements (12) dem Gas auszusetzen, wobei das längliche mehrschichtige Sensorelement (12) die Außenschicht (222) und eine Innenschicht (221) aufweist, wobei die Außenschicht (222) metallisch ist und einen höheren spezifischen Widerstand als die Innenschicht (221) und einen höheren Widerstands-Temperaturkoeffizienten als die Innenschicht (221) hat; wobei die Innenschicht (221) metallisch ist,
wobei das längliche mehrschichtige Sensorelement (12) durch ein Trägermaterial (16) abgestützt ist und somit so aufgehängt ist, dass es von einem Substrat (14) getrennt ist,
elektrisches Erwärmen des länglichen mehrschichtigen Sensorelements (12), indem ein elektrischer Strom durch es hindurchgeschickt wird; und
Erfassen von Veränderungen der Wärmeleitfähigkeit des länglichen mehrschichtigen Sensorelements (12) durch Überwachen seines Widerstandes, wobei durch Erfassen der Widerstandsveränderung eine Veränderung in der Gaszusammensetzung erkannt wird.

## Revendications

1. Capteur de gaz, comprenant un détecteur de conductivité thermique, sachant que le capteur de gaz comprend un substrat (14) et un matériau support (16),
sachant que ledit détecteur de conductivité thermique comprend un élément de détection multicouche allongé (12) qui est supporté par le matériau support (16) et, de la sorte, est suspendu de manière être séparé du substrat (14),
sachant que l'élément de détection multicouche allongé (12) est électriquement chauffé en faisant passer un courant électrique à travers lui ; et un changement dans la température d'équilibre de l'élément de détection multicouche allongé (12) entraîne un changement dans sa résistance de telle sorte que, en détectant le changement de résistance, un changement de composition de gaz soit identifié,
sachant que ledit élément de détection multicouche allongé (12) comprend une couche extérieure (222) et une couche intérieure (221), la couche extérieure (222) ayant une résistivité plus élevée que la couche intérieure (221) et un coefficient de température de résistance plus élevé que la couche intérieure (221), et
sachant que ladite couche extérieure (222) est métallique et la couche intérieure (221) est métallique.

2. Le capteur de gaz selon la revendication 1, sachant que la couche intérieure (221) est au moins en partie entourée par la couche extérieure (222), et la couche extérieure (222) est agencée pour être exposée à un gaz.

3. Le capteur de gaz selon la revendication 1 ou 2, sachant que l'élément de détection multicouche allongé (12) comprend une ou plusieurs sections suspendues, et la couche extérieure (222) entoure la couche intérieure (221) le long des sections suspendues.

4. Le capteur de gaz selon une quelconque revendication précédente, sachant que l'élément de détection multicouche allongé (12) comprend une ou plusieurs sections supportées par le matériau support (14), et le long de ces sections la couche intérieure (221) est entourée par la couche extérieure (222) et le matériau support (14).

5. Le capteur de gaz selon une quelconque revendication précédente, sachant que l'élément de détection multicouche allongé (12) est agencé de manière à avoir une longueur de trajet qui dépasse une longueur physique du détecteur.

6. Le capteur de gaz selon la revendication 5, sachant que l'élément de détection multicouche allongé (12) est agencé pour comprendre au moins l'un de serpentins et de spirales.

7. Le capteur de gaz selon une quelconque revendication précédente, sachant que le capteur de gaz est réalisé comme capteur de gaz à semiconducteur et comprend au moins un CMOS FET.

8. Le capteur de gaz tel que revendiqué dans la revendication 7, comprenant en outre au moins l'un d'un transmetteur sans fil et d'un émetteur-récepteur sans fil.

9. Le capteur de gaz tel que revendiqué dans la revendication 7 ou 8, apte à récupérer de la puissance à partir d'un champ électromagnétique.

10. Dispositif multicapteur, comprenant le capteur de gaz selon l'une des revendications 7 à 9 et au moins l'un d'un capteur d'humidité et d'un capteur de température.

11. Procédé de détection d'un gaz comprenant :
l'exposition d'une couche extérieure (222) d'un élément de détection multicouche allongé (12) audit gaz, ledit élément de détection multicouche allongé (12) comprenant la couche extérieure (222) et une couche intérieure (221), la couche extérieure (222) étant métallique et ayant une résistivité plus élevée que la couche intérieure (221) et un coefficient de température de résistance plus élevé que la couche intérieure (221) ; la couche intérieure (221) étant métallique,
sachant que l'élément de détection multicouche allongé (12) est supporté par un matériau support (16) et, de la sorte, est suspendu de manière à être séparé d'un substrat (14),
le chauffage électrique de l'élément de détection multicouche allongé (12) en faisant passer un courant électrique à travers lui ; et
la détection de changements dans la conductivité thermique dudit élément de détection multicouche allongé (12) en surveillant sa résistance, sachant qu'en détectant le changement de résistance, un changement de composition de gaz est identifié.
